# EUROPEAN PATENT SPECIFICATION

(11) **EP 4 243 196 B1**
(45) Date of publication and mention of the grant of the patent: **13.05.2026**
(21) Application number: 22756575.1
(22) Date of filing: 18.02.2022
(51) Int. Cl.: H01M 50/593, H01M 50/586, H01M 10/04, H01M 50/477, H01M 50/107, H01M 50/509, H01M 50/507, H01M 50/152, H01M 50/166, H01M 50/474, H01M 50/184, H01M 50/186, H01M 50/567, H01M 50/559, H01M 50/547, H01M 50/538, H01M 50/167, H01M 50/528

(54) **BATTERY, AND BATTERY PACK AND VEHICLE COMPRISING THE SAME**
BATTERIE UND BATTERIEPACK SOWIE FAHRZEUG DAMIT
BATTERIE, ET BLOC-BATTERIE ET VÉHICULE COMPRENANT CELLE-CI

(30) Priority: 19.02.2021 KR 20210022881; 19.02.2021 KR 20210022893; 19.02.2021 KR 20210022894; 08.03.2021 KR 20210030291; 01.10.2021 KR 20210131207; 01.10.2021 KR 20210131208; 01.10.2021 KR 20210131215; 29.10.2021 KR 20210147363
(43) Date of publication of application: 13.09.2023
(73) Proprietor: LG Energy Solution, Ltd., Seoul 07335 (KR)
(72) Inventor: JO, Min-Ki, Daejeon 34122 (KR); KANG, Bo-Hyun, Daejeon 34122 (KR); KIM, Do-Gyun, Daejeon 34122 (KR); CHOI, Su-Ji, Daejeon 34122 (KR); HWANGBO, Kwang-Su, Daejeon 34122 (KR); LIM, Hae-Jin, Daejeon 34122 (KR); LIM, Jae-Won, Daejeon 34122 (KR); KIM, Hak-Kyun, Daejeon 34122 (KR); LEE, Je-Jun, Daejeon 34122 (KR); JUNG, Ji-Min, Daejeon 34122 (KR); MIN, Geon-Woo, Daejeon 34122 (KR); KIM, Jae-Woong, Daejeon 34122 (KR)
(74) Representative: Goddar, Heinz J.
(86) International application number: PCT/KR2022/002468
(87) International publication number: WO 2022/177377

(56) References cited:
- EP-A1- 4 293 802
- CN-A- 113 346 201
- JP-A- 2018 525 781
- JP-A- 2020 071 898
- JP-B2- 4 501 361
- KR-A- 20190 078 094
- KR-A- 20190 078 094
- KR-B1- 101 679 413
- US-A1- 2014 186 692

## Description

### TECHNICAL FIELD

The present disclosure relates to a battery, and a battery pack and a vehicle comprising the same. More particularly, the present disclosure relates to a battery having a structure capable of minimizing the movement of an electrode assembly inside thereof, and a battery pack and a vehicle comprising the same.

### BACKGROUND ART

In a battery, a jelly roll having a positive electrode tab and a negative electrode tab extending upward and downward along the longitudinal direction of a housing respectively may be applied to maximize the current collection efficiency. In the battery to which the jelly roll having this structure is applied, a current collector may be used as an intermediary to connect the positive electrode tab and the negative electrode tab to a terminal and the housing respectively.

In this case, for example, the positive electrode current collector may be coupled to the positive electrode tab while covering one surface of the jelly roll, and the negative electrode current collector may be coupled to the negative electrode tab while covering the other surface of the jelly roll. Additionally, the positive electrode current collector may be electrically connected to the terminal, and the negative electrode current collector may be electrically connected to the housing.

The battery having the above-described structure may have a relatively large empty space, in particular, between the negative electrode current collector and a cap. Additionally, an empty space may be formed between the bottom of the housing disposed opposite the cap and the positive electrode current collector.

These empty spaces may cause the jelly roll to move within the housing, in particular, along the vertical direction, i.e., the heightwise direction of the battery. When the jelly roll moves in the vertical direction, damage may occur to the coupling part between the current collector and the electrode tab, and moreover, damage may occur to the coupling part between the current collector and the housing and the coupling part between the current collector and the terminal.

Accordingly, it is necessary to minimize the movement space of the jelly roll. Additionally, when an additional component is applied to reduce the movement space of the jelly roll, the procedural complexity may increase and the manufacturing cost may rise, and accordingly there is a need to solve the problem by making use of the existing component.

EP 4 293 802 A1, which constitutes prior art pursuant to Art. 54(3) EPC, discloses a cylindrical battery, which includes an electrode assembly; a battery housing accommodating the electrode assembly; a first current collecting plate coupled to the first uncoated portion and located within the battery housing; a cap plate covering the open portion; a sealing spacer configured to prevent the electrode assembly from moving and to enhance the sealing force of the battery housing; an electrode terminal electrically connected to the second uncoated portion; and an insulating gasket interposed between the electrode terminal and the perforated hole, and the electrode terminal includes a body portion; an outer flange portion extending along an outer surface of the closed portion from a circumference of one side of the body portion; an inner flange portion configured to extend from a circumference of the other side of the body portion; and a flat portion provided on an inner side of the inner flange portion.

CN 113346201 A discloses a cylindrical battery. The cylindrical battery comprises a shell, a battery cell, a pole, a cover plate, a positive collector plate and a negative collector plate, the shell is of a cylindrical groove structure, and the battery cell, the positive collector plate and the negative collector plate are all arranged in the shell. The cover plate is connected with the notch of the shell. The pole is riveted with the shell, the pole penetrates into the shell from the bottom end face of the shell, and an insulating sealing piece is arranged between the pole and the shell. The battery cell is of a full-tab structure, the two end faces of the battery cell are connected with the positive collector plate and the negative collector plate respectively, the end, located in the shell, of the pole is electrically connected with the battery cell through the positive collector plate, and the shell is electrically connected with the negative collector plate. The disclosure also relates to a battery module. The battery module comprises the cylindrical battery. The disclosure also relates to a battery pack. The battery pack comprises the battery module.

US 2014/186692 A1 discloses a rechargeable battery. In one aspect, the battery includes an electrode assembly having an uncoated region, a case accommodating the electrode assembly therein and an insulation plate disposed on the uncoated region of the electrode assembly. The battery also includes a gasket formed on the insulation plate, wherein the gasket comprises a support supported by and contacting an upper surface of the insulation plate, wherein the support comprises an inner side surface and an outer side surface, and wherein at least one of the inner and outer side surfaces forms an obtuse angle with respect to the upper surface of the insulation plate. The battery further includes a cap assembly contacting the gasket and connected to the uncoated region of the electrode assembly through a lead tab.

### DISCLOSURE

### Technical Problem

The present disclosure is designed to solve the above-described problem, and therefore the present disclosure is directed to prevent damage from occurring in an electrical coupling part due to the movement of a jelly roll in a housing.

The present disclosure is further directed to prevent the movement of a jelly roll by making use of an existing component in the manufacture of a battery, thereby preventing the increase in manufacturing process complexity and manufacturing cost caused by the application of an additional component.

However, the technical problem of the present disclosure is not limited to the above-described problem, and other problems not mentioned herein will be clearly understood by those skilled in the art from the following description.

### Technical Solution

The invention is defined by the independent claims. Advantageous embodiments are defined in the dependent claims and are outlined herein below.

To solve the above-described problem, a battery pack according to an embodiment of the present disclosure includes a plurality of batteries arranged in columns and rows and a plurality of busbars arranged between adjacent columns of the plurality of batteries, wherein the busbars connect batteries arranged in respective ones of the columns in parallel and connect batteries arranged in two adjacent columns in series. Each of the batteries comprises an electrode assembly including a first electrode and a second electrode and a separator interposed between the first electrode and the second electrode, the first electrode, the second electrode and the separator being wound around a winding axis to define a core and an outer peripheral surface, wherein the first electrode and the second electrode include a first uncoated region and a second uncoated region along a winding direction, respectively, and an active material layer coating is absent in the first uncoated region and the second uncoated region; a housing having a cylindrical structure for receiving the electrode assembly through an opening formed at a bottom and having a closed portion on a top of the housing, wherein the housing is electrically connected to the first uncoated region; a first current collector coupled to the first uncoated region and disposed within the housing; a cap covering the opening; a spacer interposed between the cap and the electrode assembly to fix the electrode assembly and seal the housing; and a terminal electrically connected to the second uncoated region and passing through the closed portion of the housing. Each of the plurality of busbars includes: a body portion extending between adjacent columns of batteries or along a respective one of the columns of batteries; a plurality of first busbar terminals extending in a direction from the body portion to terminals of the batteries of a given column of the batteries and electrically coupled to the terminals of the batteries; and a plurality of second busbar terminals extending in an opposite direction from the body portion and electrically coupled to outer surfaces of the closed portions of the housings of the batteries provided in a column of batteries that is adjacent to said given column of batteries.

The spacer may include a movement prevention portion between the first current collector and the cap; a sealing portion between the housing and the cap; and a connection portion connecting the movement prevention portion to the sealing portion.

A height of the movement prevention portion may correspond to a distance between the first current collector and the cap.

The movement prevention portion may be at a center on one surface of the electrode assembly.

The movement prevention portion may include a spacer hole at a location corresponding to a winding center hole of the electrode assembly.

The sealing portion may extend along an inner periphery of the housing.

The housing may include a beading portion formed by press-fitting an outer periphery; and a crimping portion of which an end of the housing defining the opening is extended and bent to surround edges of the cap below the beading portion.

The sealing portion may be bent along the crimping portion and surround the edges of the cap.

The connection portion may include a plurality of extension legs extending from the movement prevention portion in a radial or crisscross shape or a combined shape thereof.

The plurality of extension legs may be configured to avoid contacting the first current collector.

The plurality of extension legs may be configured to maintain a distance from the cap.

The first current collector may include a support portion at a center on a surface of the electrode assembly; a uncoated region coupling portion extending from the support portion and coupled to the first uncoated region; and a housing contact portion extending from the support portion or an end of the uncoated region coupling portion and interposed between the housing and the sealing portion.

The support portion may include a first current collector hole at a location corresponding to a winding center hole of the electrode assembly.

The housing may include a beading portion of which part of sidewall is press-fit inward; and a crimping portion of which an end of the housing defining the opening is extended and bent around edges of the cap below the beading portion. In this instance, the housing contact portion may contact a surface of the beading portion facing the cap.

The sealing portion may be bent along the crimping portion, and fill in between the housing contact portion and the cap while surrounding the edges of the cap.

The sealing portion may have a smaller thickness between the housing contact portion and the cap which than a thickness between the beading portion and the cap.

A compression ratio of the sealing portion between the housing contact portion and the cap may be larger than a compression ratio of the sealing portion between the beading portion and the cap.

A compression ratio of the sealing portion between the housing contact portion and the cap may be equal to a compression ratio of the sealing portion between the beading portion and the cap.

The movement prevention portion may cover the support portion to prevent the support portion from being exposed to outside of the movement prevention portion.

The cap may include a venting portion having a smaller thickness than its surrounding area, and the movement prevention portion may be disposed at an inner position than the venting portion to prevent the movement prevention portion from covering the venting portion.

The connection portion may not overlap the housing contact portion along a heightwise direction of the battery.

Each of the plurality of batteries may further include a second current collector coupled to the first uncoated region; and an insulator interposed between a closed portion on top of the housing and the second current collector.

A height of the insulator may correspond to a distance between the second current collector and the closed portion.

The terminal and the outer surface of the closed portion of the housing of each battery may be positioned facing upward.

To solve the above-described problem, a vehicle according to an embodiment of the present disclosure includes the battery pack according to an embodiment of the present disclosure.

### Advantageous Effects

According to an aspect of the present disclosure, it is possible to minimize the movement of the jelly roll in the housing, thereby preventing damage from occurring in the electrical coupling part.

According to another aspect of the present disclosure, it is possible to prevent the increase in manufacturing process complexity and manufacturing cost by making use of an existing component rather than additionally applying a component for preventing the movement of the jelly roll.

### BRIEF DESCRIPTION OF THE DRAWINGS

The accompanying drawings illustrate a preferred embodiment of the present disclosure, and together with the detailed description of the present disclosure described below, serve to provide a further understanding of the technical aspects of the present disclosure, and thus the present disclosure should not be construed as being limited to the drawings.
FIG. 1 is a perspective view showing a cylindrical battery.
FIG. 2 is a cross-sectional view showing the internal structure of a cylindrical battery.
FIG. 3 is a perspective view showing an exemplary shape of a first current collector.
FIG. 4 is a partial cross-sectional view showing an area in which an integrated spacer is applied.
FIG. 5 is a bottom perspective view of the integrated spacer.
FIG. 6 is a bottom view of a cylindrical battery.
FIG. 7 is a partial cross-sectional view showing an area in which an insulator is applied.
FIG. 8 is a diagram showing an electrode assembly having segments.
FIG. 9 is a top view showing a plurality of cylindrical batteries according to an embodiment of the present disclosure connected in series and in parallel using a busbar.
FIG. 10 is a schematic view showing a battery pack according to an embodiment of the present disclosure.
FIG. 11 is a conceptual diagram showing a vehicle according to an embodiment of the present disclosure.

### DETAILED DESCRIPTION

Hereinafter, the preferred embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation. Therefore, the embodiments described herein and illustrations shown in the drawings are just some most preferred embodiments of the present disclosure, but not intended to fully describe the technical aspects of the present disclosure, so it should be understood that a variety of other equivalents and modifications could have been made thereto at the time that the application was filed.

In addition, to help the understanding of the present disclosure, the accompanying drawings may illustrate some elements in exaggerated dimensions, not in actual scale. Furthermore, the same element in different embodiments may be given the same reference numeral.

The term equal refers to 'substantially equal'. Accordingly, substantially equal may include the deviation regarded as a low level in the corresponding technical field, for example, the deviation of 5% or less. In addition, a uniform parameter in a predetermined area may refer to uniform from the average point of view.

The terms "first", "second" and the like, are used to describe a variety of elements, these elements are not limited by the terms. These terms are used to distinguish one element from another, and unless the context clearly indicates otherwise, a first element may be a second element.

As used herein, the singular forms are intended to include the plural forms as well, unless the context clearly indicates otherwise.

It will be understood that when an element is referred to being "on (or below)" or "above (or under)" another element, it can be positioned in contact with an upper surface (or a lower surface) of the other element, but another element may be positioned between the element and the other element on (or below) the element.

It will be further understood that when an element is referred to as being "connected", "coupled" or "joined" to another element, the elements can be directly connected or joined to each other, but intervening elements may be present between them or each element may be "connected", "coupled" or "joined" to each other through another element.

Unless the context clearly indicates otherwise, "A and/or B" refers to A, B or A and B, and "C to D" refers to C or more and D or less.

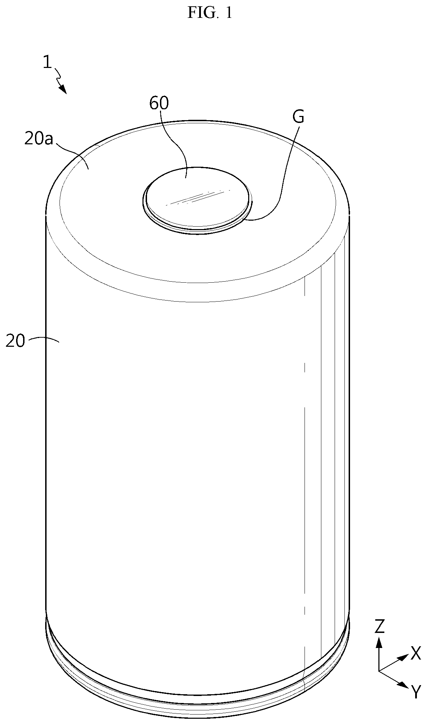

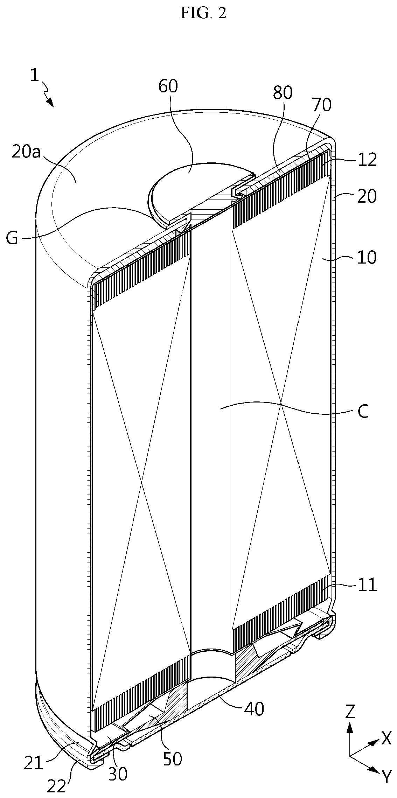

Referring to FIGS. 1 and 2, a battery 1 according to an embodiment of the present disclosure may be a cylindrical battery. The cylindrical battery 1 includes an electrode assembly 10, a housing 20, a first current collector 30, a cap 40, a spacer 50 and a terminal 60. In addition to the above-described elements, the cylindrical battery 1 may further include an insulation gasket G and/or a second current collector 70 and/or an insulator 80. The present disclosure is not limited by the shape of the battery, and may be applied to batteries of other shapes, for example, prismatic batteries.

Referring to FIGS. 2, 4, 7 and 8, the electrode assembly 10 includes a first uncoated region 11 and a second uncoated region 12. The electrode assembly 10 includes a first electrode having a first polarity, a second electrode having a second polarity and a separator interposed between the first electrode and the second electrode. The first electrode corresponds to a negative or positive electrode, and the second electrode corresponds to an electrode having the opposite polarity to the first electrode.

The electrode assembly 10 may have, for example, a jelly-roll shape. That is, the electrode assembly 10 may be manufactured by winding a stack formed by stacking the first electrode, the separator and the second electrode at least once in that order. The jelly-roll type electrode assembly 10 may have a winding center hole C at the center, the winding center hole C extending along the heightwise direction (a direction parallel to the Z axis). Meanwhile, an additional separator may be provided on the outer peripheral surface of the electrode assembly 10 for insulation from the housing 20.

The first electrode includes a first conductive substrate and a first electrode active material layer formed on one or two surfaces of the first conductive substrate. A first electrode uncoated region, in which a first electrode active material is not coated, exists at one end of the first conductive substrate in the widthwise direction (the direction parallel to the Z axis). The first electrode uncoated region extends from one end to the other end along the lengthwise direction of the first electrode when viewing the first electrode in unfolded state. The first electrode uncoated region 11 may act as a first electrode tab. The first uncoated region 11 is provided on one surface of the electrode assembly 10. More specifically, the first uncoated region 11 is provided below the electrode assembly 10 received within the housing 20 in the heightwise direction (the direction parallel to the Z axis).

The second electrode includes a second conductive substrate and a second electrode active material layer formed on one or two surfaces of the second conductive substrate. An uncoated region, in which a second electrode active material is not coated, exists at the other end of the second conductive substrate in the widthwise direction (the direction parallel to the Z axis). The second electrode uncoated region extends from one end to the other end along the lengthwise direction of the second electrode when viewing the second electrode in unfolded state. The second electrode uncoated region 12 may act as a second electrode tab. The second uncoated region 12 is provided on the other surface of the electrode assembly 10. More specifically, the second uncoated region 12 is provided on the electrode assembly 10 received within the housing 20 in the heightwise direction (the direction parallel to the Z axis).

That is, the first uncoated region 11 and the second uncoated region 12 extend and protrude in the opposite directions along the heightwise direction of the electrode assembly 10 (the direction parallel to the Z axis), i.e., the heightwise direction of the cylindrical battery 1, and are exposed to the outside of the separator.

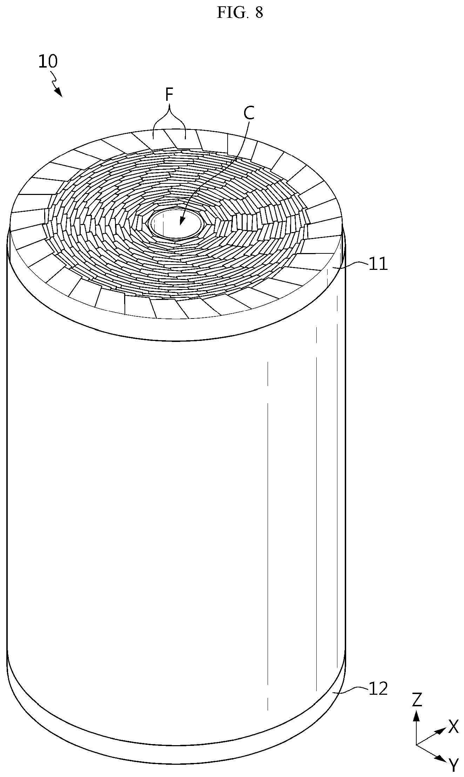

Meanwhile, referring to FIG. 8, at least part of the first uncoated region 11 and/or the second uncoated region 12 may include a plurality of segments F split along the winding direction of the electrode assembly 10. In this case, the plurality of segments may be bent along the radial direction of the electrode assembly 10. The plurality of bent segments may overlap in multiple layers. In this case, the first current collector 30 and/or the second current collector 70 as described below may be coupled to an area in which the plurality of segments F overlaps in multiple layers. Meanwhile, the electrode assembly 10 may have a target welding area in which the number of overlapping layers of the segments F of the first uncoated region 11 is uniformly maintained along the radial direction of the electrode assembly 10. In this area, the number of overlapping layers is maintained approximately at the maximum, and thus it may be advantageous to perform, in the above-described area, welding between the first current collector 30 and the first uncoated region 11 and/or welding between the second current collector 70 and the second uncoated region 12 as described below. For example, in case that laser welding is applied, when the output of the laser is increased to improve the welding quality, this prevents the electrode assembly 10 from being damaged by the laser beam passing through the first uncoated region 11 and/or the second uncoated region 12. Additionally, this effectively prevents impurities such as weld spatter from entering the electrode assembly 10.

In the present disclosure, the positive electrode active material coated on the positive electrode current collector and the negative electrode active material coated on the negative electrode current collector may include any active material known in the corresponding technical field pertaining to the present disclosure without limitations.

In an example, the positive electrode active material may include an alkali metal compound represented by general formula A[AₓM_{y}]O_{2+z} (A includes at least one of Li, Na or K; M includes at least one selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; the stoichiometric coefficient of the components included in x, y, z and M is selected to keep the compound electrically neutral).

In another example, the positive electrode active material may include an alkali metal compound xLiM¹O₂-(1-x)Li₂M²O₃ (M¹ includes at least one element having the mean oxidation state of 3; M² includes at least one element having the mean oxidation state of 4; 0≤x≤1) disclosed by US6,677,082 and US6,680,143.

In still another example, the positive electrode active material may include lithium metal phosphate represented by general formula LiₐM¹ₓFe₁₋ₓM²_{y}P_{1-y}M³_{z}O_{4-z} (M¹ includes at least one selected from Ti, Si, Mn, Co, Fe, V, Cr, Mo, Ni, Nd, Al, Mg and Al; M² includes at least one selected from Ti, Si, Mn, Co, Fe, V, Cr, Mo, Ni, Nd, Al, Mg, Al, As, Sb, Si, Ge, V and S; M³ includes a halogen group element selectively including F; 0 < a ≤2, 0 ≤ x ≤ 1, 0 ≤ y < 1, 0 ≤ z < 1; the stoichiometric coefficient of the components included in a, x, y, z, M¹, M² and M³ is selected to keep the compound electrically neutral), or Li₃M₂(PO₄)₃ [M includes at least one selected from Ti, Si, Mn, Fe, Co, V, Cr, Mo, Ni, Al, Mg and Al].

Preferably, the positive electrode active material may include primary particles and/or secondary particles formed by agglomeration of the primary particles.

In an example, the negative electrode active material may include a carbon material, lithium metal or a lithium metal compound, silicon or a silicon compound, tin or a tin compound. Metal oxide having the potential of less than 2V such as TiO₂ and SnO₂ may be used for the negative electrode active material. The carbon material may include a low crystalline carbon and a high crystalline carbon.

The separator may include, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, used singly or a stack of them. In another example, the separator may include a commonly used porous nonwoven fabric, for example, a nonwoven fabric made of high melting point glass fibers and polyethylene terephthalate fibers.

A coating layer of inorganic particles may be included on at least one surface of the separator. Additionally, the separator itself may be a coating layer of inorganic particles. The particles that form the coating layer may have a bond structure with a binder to create interstitial volume between adjacent particles.

The inorganic particles may include inorganic particles having the dielectric constant of 5 or more. Non-limiting examples of the inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

An electrolyte may be a salt having a structure such as A⁺B⁻. Here, A⁺ includes an alkali metal cation such as Li⁺, Na⁺, K⁺ or a combination thereof. B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte may be used by dissolving in an organic solvent. The organic solvent may include at least one of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC) or γ-butyrolactone.

Referring to FIGS. 1, 2, 4 and 7, the housing 20 receives the electrode assembly 10 through an opening formed on bottom. The housing 20 is an approximately cylindrical receiving structure having the opening on bottom and a closed portion on top. The housing 20 may be made of a material having conductive properties such as a metal. The material of the housing 20 may be, for example, aluminum. The side (outer peripheral surface) and the upper surfaces of the housing 20 may be integrally formed. The upper surface (the surface parallel to the X-Y plane) of the housing 20 may have an approximately flat shape. The housing 20 receives the electrolyte together with the electrode assembly 10 through the opening formed on bottom.

The housing 20 is electrically connected to the electrode assembly 10. The housing 20 is connected to the first uncoated region 11 of the electrode assembly 10. Accordingly, the housing 20 has electrically the same polarity as the first uncoated region 11.

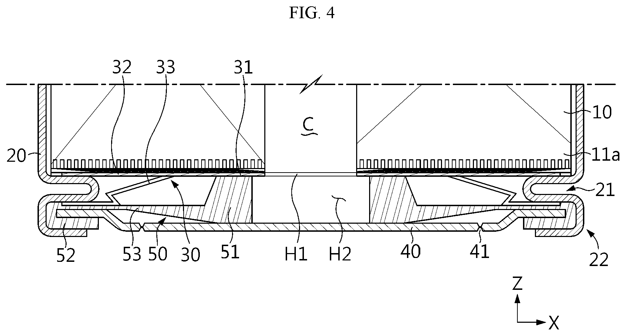

Referring to FIGS. 2 and 4, the housing 20 may include a beading portion 21 and a crimping portion 22 formed at the lower end. The beading portion 21 is disposed below the electrode assembly 10 received in the housing 20. The beading portion 21 is formed by press-fitting the outer periphery of the housing 20. The beading portion 21 may partially reduce the inner diameter of the housing 20 to prevent the electrode assembly 10 having a size approximately corresponding to the width of the housing 20 from exiting the opening formed on bottom of the housing 20. The beading portion 21 may act as a support in which the cap 40 is seated.

The crimping portion 22 is formed below the beading portion 21. The crimping portion 22 extends and bend such that an end of the housing defining the opening of the housing 10 surrounds the periphery of the cap 30 with the periphery of the spacer 50 interposed between.

Referring to FIGS. 2 to 4, the first current collector 30 may be coupled to the first uncoated region 11 of the electrode assembly 10 and disposed within the housing 20. The first current collector 30 covers at least part of one surface on the bottom of the electrode assembly 10. The assembly including the electrode assembly 10 and the first current collector 30 may be inserted into the housing 20 through the opening formed on bottom of the housing 20. The first current collector 30 is electrically connected to the housing 20. That is, the first current collector 30 may act as a medium for electrical connection between the electrode assembly 10 and the housing 20.

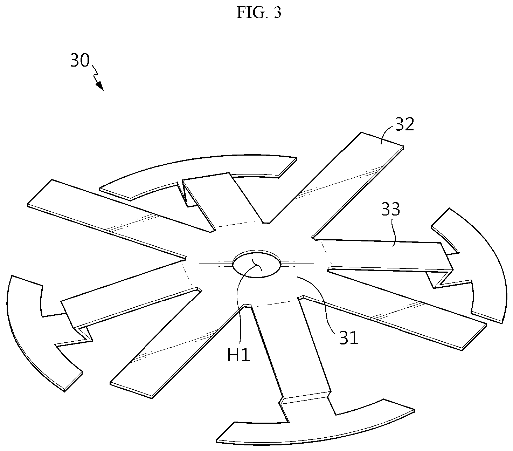

Referring to FIG. 3, the first current collector 30 may include, for example, a support portion 31, an uncoated region coupling portion 32 and a housing contact portion 33. The support portion 31 is disposed at the approximately center on one surface formed on the bottom of the electrode assembly 10. The support portion 31 may have a first current collector hole H1. In this case, the first current collector hole H1 may be formed at a location corresponding to the winding center hole C of the electrode assembly 10. The first current collector hole H1 may act as a passage for insertion of a welding rod for coupling between the terminal 60 and the second current collector 70 or a passage for laser radiation as described below. Besides, the first current collector hole H1 may act as a passage for smooth permeation of the electrolyte solution into the electrode assembly 10 when injecting the electrolyte solution.

The uncoated region coupling portion 32 extends from the support portion 31 and is coupled to the first uncoated region 11. For example, there may be a plurality of uncoated region coupling portions 32. In this case, each of the plurality of uncoated region coupling portions 32 may extend radially from the support portion 31. The housing contact portion 33 may extend from the support portion 31 as shown in FIG. 3, or as opposed to FIG. 3, the housing contact portion 33 may extend from the end of the uncoated region coupling portion 32. The end of the housing contact portion 33 may contact the housing 20 between a sealing portion 52 of the spacer 50 as described below and the housing 20, thereby establishing an electrical connection between the housing 20 and the first current collector 30. For example, the end of the housing contact portion 33 may contact one surface of the beading portion 21 facing the cap 40.

For example, there may be a plurality of housing contact portions 33. In this case, the plurality of housing contact portions 33 may extend radially from the support portion 31 as shown in FIG. 3, and at least one housing contact portion 33 may be disposed between the adjacent uncoated region coupling portions 32. Alternatively, as opposed to FIG. 3, each of the plurality of housing contact portions 33 may extend from the end of each of the plurality of uncoated region coupling portions 32.

Referring to FIGS. 2, 4 and 6, the cap 40 covers the opening formed in the housing 20. For example, the cap 40 may be made of a metal material to ensure stiffness. The cap 40 forms the lower surface of the cylindrical battery 1. In the cylindrical battery 1 of the present disclosure, the cap 40 may be non-polar even when the cap 40 is made of a metal material having conductivity properties. Non-polar may represent that the cap 40 is electrically insulated from the housing 20 and the terminal 60. Accordingly, the cap 40 does not act as a positive electrode terminal or a negative electrode terminal. Accordingly, the cap 40 does not need to be electrically connected to the electrode assembly 10 and the housing 20, and the cap 40 is not necessarily made of a conductive metal.

When the housing 20 of the present disclosure includes the beading portion 21, the cap 40 may be seated on the beading portion 21 formed in the housing 20. Additionally, when the housing 20 of the present disclosure includes the crimping portion 22, the cap 40 is fixed by the crimping portion 22. The periphery of the spacer 50 is interposed between the cap 40 and the crimping portion 22 of the housing 20 to ensure sealability of the housing 20.

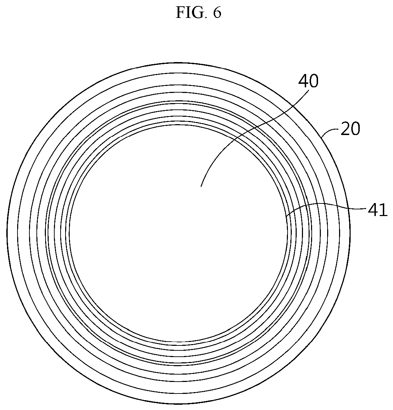

Referring to FIGS. 4 and 6, the cap 40 may further include a venting portion 41 to prevent the internal pressure from rising above a preset value due to gas generated in the housing 20. The venting portion 41 corresponds to an area having a smaller thickness than the other areas in the cap 40. The venting portion 41 is structurally vulnerable than any other area. Accordingly, when the internal pressure of the housing 20 rises above the predetermined level due to an abnormality in the cylindrical battery 1, the venting portion 41 may rupture to force gas generated in the housing 20 out. For example, the venting portion 41 may be formed by notching one or two surfaces of the cap 40 to partially reduce the thickness of the housing 20.

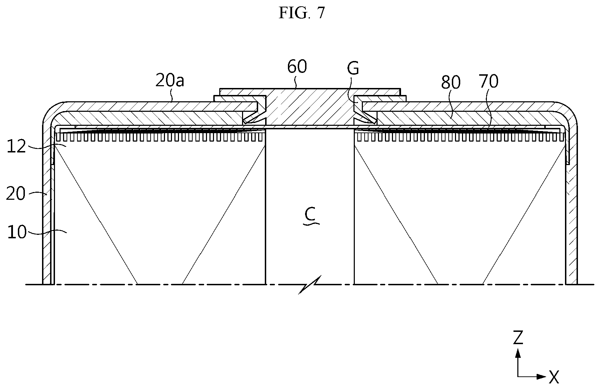

As shown in FIG. 7, the lower end of the cap 40 is preferably disposed higher than the lower end of the housing 20. In this case, even when the lower end of the housing 20 contacts the ground or the bottom of the housing for forming a module or a pack, the cap 40 does not contact the ground or the bottom of the housing. Accordingly, it is possible to prevent a phenomenon in which the pressure required for the rupture of the venting portion 41 is different from the design value due to the weight of the cylindrical battery 1, thereby allowing for smooth rupture of the venting portion 41.

Meanwhile, when the venting portion 41 has a closed loop shape as shown in FIGS. 4 and 6, it is more advantageous in terms of the easiness of rupture as the distance from the center of the cap 40 to the venting portion 41 is longer. When the same venting pressure is applied, as the distance from the center of the cap 40 to the venting portion 41 is longer, a force applied to the venting portion 41 is larger, which makes rupture easier. Additionally, it is more advantageous in terms of smooth venting gas discharge as the distance from the center of the cap 40 to the venting portion 41 is longer. From this perspective, it is advantageous that the venting portion 41 is formed along the periphery of an approximately flat area extended downward (on the basis of FIG. 4) from the peripheral area of the cap 40.

Although FIG. 6 shows the venting portion 41 continuously formed in an approximately circular shape, the present disclosure is not limited thereto. The venting portion 41 may be discontinuously formed on the cap 40 in an approximately circular shape, and may be formed in the shape of an approximately straight line or other shapes.

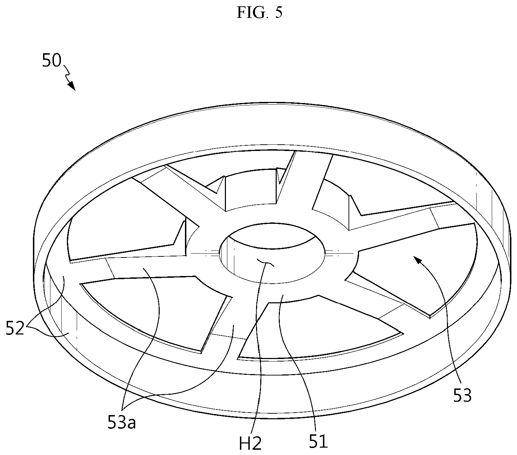

Referring to FIGS. 2, 4 and 5, the spacer 50 is configured to prevent the movement of the electrode assembly 10, and enhance the sealability of the housing 20. That is, the spacer 50 is interposed between the cap 40 and the electrode assembly 10 to fix the electrode assembly 10 and seal up the housing 20. The spacer 50 may include a central portion which supports the bottom of the first current collector 30 and a peripheral portion which contacts the housing 20. In this case, the upper surface of the central portion may be disposed higher than the upper surface of the peripheral portion. The upper surface of the central portion may contact the lower surface of the first current collector 30, and the lower surface of the central portion may contact the inner surface of the cap 40. The central portion may include a spacer hole H2 formed at a location corresponding to the winding center hole C of the electrode assembly 10. The peripheral portion may extend to the inner surface of the housing 20. The spacer 50 may further include a flange which extends downward from the outer edges of the peripheral portion. In this case, the flange may be bent together with the housing 20 when crimping the housing 20 so that the flange may be disposed around the edges of the cap 40.

In another aspect, the spacer 50 may include, for example, a movement prevention portion 51, the sealing portion 52 and a connection portion 53. The movement prevention portion 51 is interposed between the first current collector 30 and the cap 40. The movement prevention portion 51 may have a height corresponding to the distance between the first current collector 30 and the cap 40. In this case, the movement prevention portion 51 may effectively prevent the electrode assembly 10 from moving in the housing 20 due to the gap formed between the first current collector 30 and the cap 40. Accordingly, the movement prevention portion 51 may prevent damage from occurring in the coupling part between the electrode assembly 10 and the first current collector 30 and/or the coupling part between the first current collector 30 and the housing 20.

The movement prevention portion 51 may be disposed at approximately the center of one surface on the bottom of the electrode assembly 10. The movement prevention portion 51 may have the spacer hole H2 formed at the location corresponding to the winding center hole C of the electrode assembly 10. In the same way as the above-described first current collector hole H1, the spacer hole H2 may act as an insertion passage of a welding rod or a passage for laser radiation. In the same way as the above-described first current collector hole H1, the spacer hole H2 may act as a passage for smooth permeation of the electrolyte solution into the electrode assembly 10 when injecting the electrolyte solution.

Meanwhile, the movement prevention portion 51 may cover the support portion 31 to prevent the support portion 31 of the first current collector 30 from being exposed to the outside of the movement prevention portion 51. That is, the outer diameter of the top of the movement prevention portion 51 may be approximately equal to or larger than the outer diameter of the support portion 31. In this case, the movement prevention portion 51 may effectively press down the first current collector 30.

In another aspect, the movement prevention portion 51 may be configured to cover at least part of a welding portion formed by welding the uncoated region coupling portion 32 of the first current collector 30 to the first uncoated region 11. That is, the radius of the top of the movement prevention portion 51 may be larger than the distance from the welding portion closest to the core of the electrode assembly 10 to the core of the electrode assembly 10. In this case, the movement prevention portion 51 may effectively prevent damage of the welded part of the first current collector 30 and the first uncoated region 11, for example, in the crimping or sizing process.

In still another aspect, the movement prevention portion 51 may be disposed at the inner position toward the core than the venting portion 41 not to cover the venting portion 41 formed in the cap 40. That is, the radius measured on top of the movement prevention portion 51 may be smaller than the distance from the center of the cap 40 to the venting portion 41. This is to prevent a phenomenon in which the venting portion 41 is covered by the spacer 50 and thus the rupture pressure of the venting portion 41 is different from the design value.

The sealing portion 52 is interposed between the housing 20 and the cap 40. The sealing portion 52 may extend along the inner periphery of the housing 20. When the housing 20 includes the crimping portion 22, the sealing portion 52 may be bent along the bent shape of the crimping portion 22 so that the sealing portion 52 may be disposed around the peripheral area of the cap 40. In another aspect, the sealing portion 52 may be bent along the crimping portion 22 to fill in between the housing contact portion 33 and the cap 40 while surrounding the edges of the cap 40. As described above, the sealing portion 52 may act as a gasket to improve the fixation of the cap 40 and the sealability of the housing 20.

Meanwhile, the sealing portion 52 may have a smaller thickness between the housing contact portion 33 and the cap 40 than the thickness between the beading portion 21 and the cap 40. It is because the sealing portion 52 may be compressed in the area in which the housing contact portion 33 is interposed between the housing 40 and the beading portion 21 more than in the other areas. Accordingly, the compression ratio of the sealing portion 52 between the housing contact portion 33 and the cap 40 is larger than the compression ratio of the sealing portion 52 between the beading portion 21 and the cap 40. By contrast, the sealing portion 52 may be configured such that the compression ratio between the housing contact portion 33 and the cap 40 is approximately equal to the compression ratio between the beading portion 21 and the cap 40. In this case, it is possible to prevent the partial reduction in sealability due to difference of compressibility ratio for each area.

The connection portion 53 connects the movement prevention portion 51 to the sealing portion 52. For example, the connection portion 53 may include a plurality of extension legs 53a extending from the movement prevention portion 51 in a radial or crisscross shape or a combined shape thereof. When the connection portion 53 is configured as described above, it is possible to inject the electrolyte solution well through a space between the adjacent extension legs 53a, and release gas inside when venting occurs due to the rise in the internal pressure.

As shown in FIG. 4, the plurality of extension legs 53a may be configured to avoid contacting the remaining parts except parts of the housing contact portion 33 of the first current collector 30 inserted between the crimping portion 22 and/or the cap 40. For example, the connection portion 53 may not overlap the housing contact portion 33 along the heightwise direction of the cylindrical battery 1 (the direction parallel to the Z axis). In particular, when the extension legs 53a extend radially from the movement prevention portion 51 and the plurality of housing contact portions 33 extends radially from the support portion 31, the extension legs 53a and the housing contact portions 33 may be arranged in a staggered pattern to prevent them from overlapping along the vertical direction. In this case, even though the shape of the components is changed by the compressive force applied to the housing 20 in the vertical direction, it is possible to significantly reduce the likelihood that interference between the extension legs 53a and the housing contact portions 33 occurs, thereby significantly reducing the likelihood that the coupling parts between components are damaged.

In this case, even though the shape of the spacer 50 is changed by a sizing process of compressing the cylindrical battery 1 along the heightwise direction (the direction parallel to the Z axis) or other reasons, it is possible to minimize the interference between the connection portion 53 of the spacer 50 and the housing contact portion 33 of the first current collector 30. In particular, when the extension legs 53a are configured to avoid contacting the cap 40, even though the shape of the housing 20 is changed by the sizing process or external impacts, it is possible to reduce the likelihood that the shape change of the extension legs 53a occurs.

Meanwhile, each element of the spacer 50 may be integrally formed. For example, the movement prevention portion 51, the sealing portion 52 and the connection portion 53 may be integrated into the spacer 50 by injection molding. That is, the cylindrical battery 1 of the present disclosure can obtain the enhanced sealing effect for the opening of the housing 20 and the movement prevention effect of the electrode assembly 10 through design modification to the gasket component used to seal the opening of the housing 20. Accordingly, according to the present disclosure, it is possible to prevent the increase in manufacturing process complexity and manufacturing cost caused by the application of additional components.

Referring to FIGS. 1, 2 and 7, the terminal 60 is electrically connected to the second uncoated region 12 of the electrode assembly 10. For example, the terminal 60 may pass through approximately the center of the closed portion formed on top of the housing 20. Part of the terminal 60 may be exposed through the top of the housing 20, and the others may be disposed within the housing 20. For example, the terminal 60 may be fixed onto the inner surface of the closed portion of the housing 20 by riveting.

As described above, in the present disclosure, as the housing 20 is electrically connected to the first uncoated region 11 of the electrode assembly 10, the closed portion formed on top of the housing 20 may act as a first electrode terminal 20a having the first polarity. By contrast, as the terminal 60 is electrically connected to the second uncoated region 12 of the electrode assembly 10, the terminal 60 exposed to the outside of the housing 20 may act as a second electrode terminal.

That is, the cylindrical battery 1 of the present disclosure has a structure in which the pair of electrode terminals 60, 20a are disposed in the same direction. Accordingly, in the electrical connection of the plurality of cylindrical batteries 1, an electrical connection component such as a bus bar may be placed on only one side of the cylindrical battery 1. This may bring about a simple battery pack structure and improved energy density. Additionally, the cylindrical battery 1 has a structure in which one surface of the housing 20 having an approximately flat shape may be used as the first electrode terminal 20a, thereby ensuring a sufficient joining area for joining the electrical connection component such as a bus bar to the first electrode terminal 20a. Accordingly, the cylindrical battery 1 may have sufficient joining strength between the electrical connection component and the first electrode terminal 20a and reduce the resistance at the joined part to a desirable level.

As described above, when the terminal 60 acts as the second electrode terminal, the terminal 60 is electrically insulated from the housing 20 having the first polarity. The electrical insulation between the housing 20 and the terminal 60 may be achieved by various methods. For example, insulation may be achieved by interposing an insulation gasket G between the terminal 60 and the housing 20. Alternatively, insulation may be achieved by forming an insulating coating layer in a part of the terminal 60. Alternatively, the terminal 60 and the housing 20 may be spaced apart from each other to prevent them from contacting each other, and the terminal 60 may be structurally firmly fixed. Alternatively, two or more of the above-described methods may be applied together.

Meanwhile, when the insulation gasket G is applied for electrical insulation and riveting is applied to fix the terminal 60, the insulation gasket G may deform together with the terminal 60 during riveting such that the insulation gasket G is bent toward the inner surface of the closed portion on top of the housing 20. When the insulation gasket G is made of a resin material, the insulation gasket G may be coupled to the housing 20 and the terminal 60 by heat fusion. In this case, it is possible to enhance sealability at the coupling interface between the insulation gasket G and the terminal 60 and the coupling interface between the insulation gasket G and the housing 20.

Referring to FIGS. 2 and 7, the second current collector 70 is coupled to the upper part of the electrode assembly 10. The second current collector 70 is made of a metal material having conductive properties and coupled to the second uncoated region 12. For example, the coupling between the second uncoated region 12 and the second current collector 70 may be accomplished by laser welding.

Referring to FIGS. 2 and 7, the insulator 80 is interposed between the closed part formed on top of the housing 20 and the top of the electrode assembly 10 or between the closed part and the second current collector 70. The insulator 80 may be made of, for example, a resin material having insulating properties. The insulator 80 prevents the contact between the electrode assembly 10 and the housing 20 and/or the contact between the electrode assembly 10 and the second current collector 70.

Besides, the insulator 80 may be interposed between the top of the outer peripheral surface of the electrode assembly 10 and the inner surface of the housing 20. In this case, it is possible to prevent a short from occurring due to the contact between the second uncoated region 12 of the electrode assembly 10 and the inner surface of the sidewall of the housing 20.

The insulator 80 may have a height corresponding to the distance between the closed part formed on top of the housing 20 and the electrode assembly 10 or the distance between the closed part and the second current collector 70. In this case, it is possible to prevent the electrode assembly 10 from moving in the housing 20, thereby significantly reducing the likelihood that the coupling part for electrical connection between components may be damaged. When the insulator 80 is applied together with the spacer 50, the movement prevention effect of the electrode assembly 10 may be maximized.

The insulator 80 may have an opening formed at a location corresponding to the winding center hole C of the electrode assembly 10. Through the opening, the terminal 60 may directly contact the second current collector 70.

The cylindrical battery 1 of the present disclosure has the minimized resistance through the increased weld area through the bent surface, the diverse current path using the first current collector 30 and the minimized current path length. The AC resistance of the cylindrical battery 1 measured through a resistance meter between the positive electrode and the negative electrode and between the terminal 60 and its surrounding flat surface 20a may be approximately 0.5 miliohms to 4 miliohms, and preferably approximately 1 miliohm to 4 miliohm, suitable for fast charging.

Preferably, the cylindrical battery may have a ratio of form factor (a value obtained by dividing the diameter of the cylindrical battery by its height, i.e., defined as a ratio of diameter Φ to height H) larger than approximately 0.4.

Here, the form factor refers to a value indicating the diameter and height of the cylindrical battery. Preferably, the diameter of the cylindrical battery may be approximately 40 mm to 50 mm, and the height may be approximately 60 mm to 130 mm. The cylindrical battery according to an embodiment of the present disclosure may be, for example 46110 battery, 4875 battery, 48110 battery, 4880 battery, 4680 battery. In the value indicating the form factor, the former two numbers indicate the diameter of the battery and the remaining numbers indicate the height of the battery.

When the electrode assembly having a tab-less structure is applied to the cylindrical battery having the ratio of form factor of higher than 0.4, the uncoated region is susceptible to tear due to high stresses applied in the radial direction when bending the uncoated region. Additionally, to ensure sufficient weld strength and reduce the resistance when welding the current collector to the bent surface area of the uncoated region, it is necessary to sufficiently increase the number of stacks of the uncoated region on the bent surface area. This requirement may be met according to the electrode and the electrode assembly according to the embodiments (variations) of the present disclosure.

The battery according to an embodiment of the present disclosure may be a cylindrical battery having an approximately cylindrical shape with the diameter of approximately 46 mm, the height of approximately 110 mm and the ratio of form factor of approximately 0.418.

The battery according to another embodiment may be a cylindrical battery having an approximately cylindrical shape with the diameter of approximately 48 mm, the height of approximately 75 mm and the ratio of form factor of approximately 0.640.

The battery according to another embodiment may be a cylindrical battery having an approximately cylindrical shape with the diameter of approximately 48 mm, the height of approximately 110 mm and the ratio of form factor of approximately 0.418.

The battery according to another embodiment may be a cylindrical battery having an approximately cylindrical shape with the diameter of approximately 48 mm, the height of approximately 80 mm, and the ratio of form factor of approximately 0.600.

The battery according to another embodiment may be a cylindrical battery having an approximately cylindrical shape with the diameter of approximately 46 mm, the height of approximately 80 mm, and the ratio of form factor of approximately 0.575.

Conventionally, batteries having the ratio of form factor of approximately 0.4 or less have been used. That is, for example, 1865 battery and 2170 battery have been used. In the case of 1865 battery, the diameter is approximately 18 mm, the height is approximately 65 mm, and the ratio of form factor is approximately 0.277. In the case of 2170 battery, the diameter is approximately 21 mm, the height is approximately 70 mm, and the ratio of form factor is approximately 0.300.

Meanwhile, a method for manufacturing the battery 1 of the present disclosure as described above includes inserting the electrode assembly 10 into the housing; placing the current collector (the first current collector) 30 on the bottom surface of the electrode assembly 10; placing the spacer 50 in contact with the current collector 30; sealing the housing 20 with the edges of the spacer 50; and connecting the cap 40 to the housing 20.

The manufacturing method may further include connecting the cap 40 to the edges of the spacer 50 such that the spacer 50 extends from the cap 40 to the current collector 30. The edges of the spacer 50 sealing the housing 20 may extend along the circumferential direction.

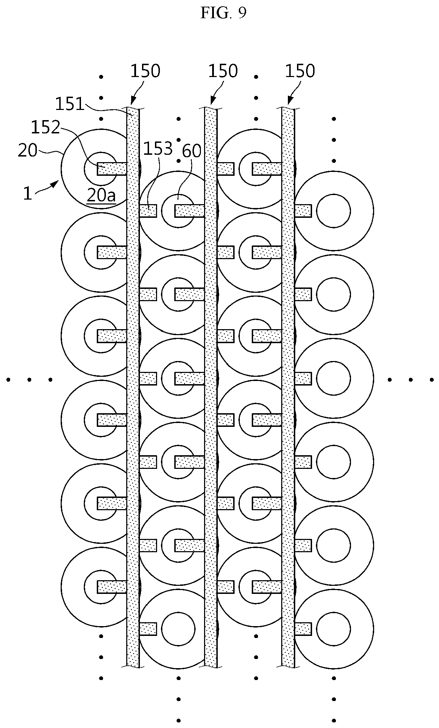

Referring to FIG. 9, the plurality of cylindrical batteries 1 may be connected in series and in parallel using a busbar 150 on the cylindrical batteries 1. The number of cylindrical batteries 1 may be smaller or larger, considering the capacity of a battery pack.

In each cylindrical battery 1, the terminal 60 may have the positive polarity, and the outer surface 20a of the closed portion of the housing 20 may have the negative polarity, and vice versa.

Preferably, the plurality of cylindrical batteries 1 may be arranged in a plurality of columns and rows. The column is a vertical direction with respect to Fig. 9, and the row is a horizontal direction with respect to the Fig. 9. Additionally, in order to maximize the space efficiency, the cylindrical batteries 1 may be arranged in a closest packing structure. The closest packing structure is formed by connecting the centers of the terminals 60 exposed to the outside of the housing 20 to each other into a shape of a right triangle. Preferably, the busbar 150 may be positioned on the plurality of cylindrical batteries 1, more preferably between adjacent columns. Alternatively, the busbar 150 may be positioned between adjacent rows.

Preferably, the busbar 150 connects in parallel the batteries 1 arranged in the same column, and connects in series the cylindrical batteries 1 arranged in two adjacent columns.

Preferably, the busbar 150 may include a body portion 151, a plurality of first busbar terminals 152 and a plurality of second busbar terminals 153 for series and parallel connection.

The body portion 151 may extend between the terminals 60 of the adjacent cylindrical batteries 1, and preferably between the columns of the cylindrical batteries 1. Alternatively, the body portion 151 may extend along the columns of the cylindrical batteries 1 and may be regularly bent in a zigzag pattern.

The plurality of first busbar terminals 152 may extend and protrude from one side of the body portion 151 to the terminal 60 of each cylindrical battery 1, and be electrically coupled to the terminal 60. The electrical coupling between the first busbar terminal 152 and the terminal 60 may be accomplished by laser welding, ultrasonic welding, etc. Additionally, the plurality of second busbar terminals 153 may be electrically coupled to the outer surface 20a of each cylindrical battery 1 from the other side of the body portion 151. The electrical coupling between the second busbar terminals 153 and the outer surfaces 20a may be accomplished by laser welding, ultrasonic welding, etc.

Preferably, the body portion 151, the plurality of first busbar terminals 152 and the plurality of second busbar terminals 153 may be made from a single conductive metal plate. The metal plate may include, for example, an aluminum plate or a copper plate, but the present disclosure is not limited thereto. In a variation, the body portion 151, the plurality of first busbar terminals 152 and the plurality of second busbar terminals 153 may be separately manufactured by the unit of a piece and then coupled to each other, for example, through welding.

As the cylindrical battery 1 according to the present disclosure is configured such that the terminal 60 having the positive polarity and the outer surface 20a of the closed portion of the housing 20 having the negative polarity are positioned in the same direction, it is possible to easily establish an electrical connection of the cylindrical batteries 1 using the busbar 150.

Additionally, as the cylindrical battery 1 the terminal 60 and the outer surface 20a of the closed portion of the housing 20 have large areas, it is possible to sufficiently reduce the resistance of a battery pack including the cylindrical battery 1 due to a sufficient coupling area of the busbar 150.

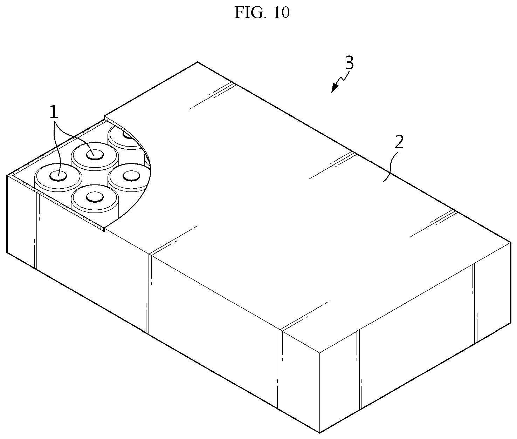

Referring to FIG. 10, a battery pack 3 according to an embodiment of the present disclosure includes a battery assembly including a plurality of cylindrical batteries 1 electrically connected according to an embodiment of the present disclosure as described above and a pack housing 2 in which the battery assembly is received. The electrical connection structure of the plurality of batteries 1 through the busbar has been described with reference to FIG. 9 for illustrative purposes, and a cooling unit and a power terminal are omitted for convenience of illustration in the drawings.

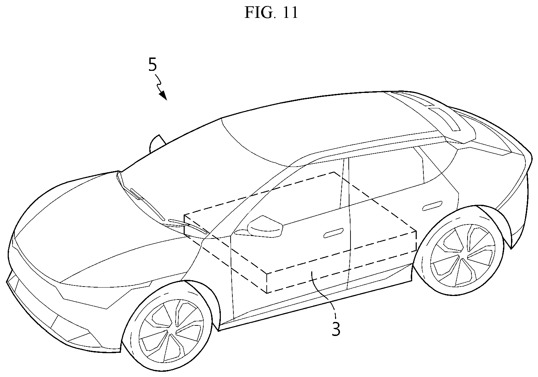

Referring to FIG. 11, a vehicle 5 according to an embodiment of the present disclosure may be, for example, an electric vehicle, a hybrid electric vehicle and a plugin hybrid electric vehicle, and includes the battery pack 3 according to an embodiment of the present disclosure. The vehicle 5 includes a four-wheeler and a two-wheeler. The vehicle 5 works by the power supplied from the battery pack 3 according to an embodiment of the present disclosure.

### [Description of Reference Numerals]

5: Vehicle
3: Battery pack
2: Pack housing
1: Cylindrical battery
10: Electrode assembly
11: First uncoated region
12: Second uncoated region
C: Winding center hole
20: Housing
20a: First electrode terminal
21: Beading portion
22: Crimping portion
30: First current collector
31: Support portion
32: Uncoated region coupling portion
33: Housing contact portion
H1: First current collector hole
40: Cap
41: Venting portion
50: Spacer
51: Movement prevention portion
H2: Spacer hole
52: Sealing portion
53: Connection portion
53a: Extension leg
60: Terminal (Second electrode terminal)
G: Insulation gasket
70: Second current collector
80: Insulator

## Claims

1. A battery pack (3), comprising:
a plurality of batteries (1) arranged in columns and rows and a plurality of busbars (150) arranged between adjacent columns of the plurality of batteries (1), wherein the busbars (150) connect batteries (1) arranged in respective ones of the columns in parallel and connect batteries (1) arranged in two adjacent columns in series,
wherein each of the batteries (1) comprises:
an electrode assembly (10) including a first electrode and a second electrode and a separator interposed between the first electrode and the second electrode, the first electrode, the second electrode and the separator being wound around a winding axis to define a core and an outer peripheral surface, wherein the first electrode and the second electrode include a first uncoated region (11) and a second uncoated region (12) along a winding direction, respectively, and an active material layer coating is absent in the first uncoated region (11) and the second uncoated region (12);
a housing (20) having a cylindrical structure for receiving the electrode assembly (10) through an opening of the housing (20) formed at a bottom and having a closed portion on a top of the housing (20), wherein the housing (20) is electrically connected to the first uncoated region (11);
a first current collector (30) coupled to the first uncoated region (11) and disposed within the housing (20);
a cap (40) covering the opening;
a spacer (50) interposed between the cap (40) and the electrode assembly (10) and configured to fix the electrode assembly (10) and to seal the housing (20); and
a terminal (60) electrically connected to the second uncoated region (12) and passing through the closed portion of the housing (20),
wherein each of the plurality of busbars (150) includes:
a body portion (151) extending between adjacent columns of batteries (1) or along a respective one of the columns of batteries (1);
a plurality of first busbar terminals (152) extending in a direction from the body portion (151) to terminals (60) of the batteries (1) of a given column of the batteries (1) and electrically coupled to the terminals (60) of the batteries (1); and
a plurality of second busbar terminals (153) extending in an opposite direction from the body portion (151) and electrically coupled to outer surfaces (20a) of the closed portions of the housings (20) of the batteries (1) provided in a column of batteries (1) that is adjacent to said given column of batteries (1).

2. The battery pack (3) according to claim 1, wherein the spacer (50) includes:
a movement prevention portion (51) between the first current collector (30) and the cap (40);
a sealing portion (52) between the housing (20) and the cap (40); and
a connection portion (53) connecting the movement prevention portion (51) to the sealing portion (52).

3. The battery pack (3) according to claim 2, wherein a height of the movement prevention portion corresponds to a distance between the first current collector (30) and the cap (40).

4. The battery pack (3) according to claim 2, wherein the movement prevention portion (51) is at a center on one surface of the electrode assembly (10).

5. The battery pack (3) according to claim 2, wherein the movement prevention portion (51) includes a spacer hole at a location corresponding to a winding center hole of the electrode assembly (10).

6. The battery pack (3) according to claim 2, wherein the sealing portion (52) extends along an inner periphery of the housing (20).

7. The battery pack (3) according to claim 6, wherein the housing (20) includes:
a beading portion (21) formed by press-fitting an outer periphery; and
a crimping portion (22) of which an end of the housing (20) defining the opening is extended and bent to surround edges of the cap (40) below the beading portion (21).

8. The battery pack (3) according to claim 7, wherein the sealing portion (52) is bent along the crimping portion (22) and surrounds the edges of the cap (40).

9. The battery pack (3) according to claim 2, wherein the connection portion (53) includes a plurality of extension legs (53a) extending from the movement prevention portion (51) in a radial or crisscross shape or a combined shape thereof.

10. The battery pack (3) according to claim 9, wherein the plurality of extension legs (53a) is configured to avoid contacting the first current collector (30).

11. The battery pack (3) according to claim 9, wherein the plurality of extension legs (53a) is configured to maintain a distance from the cap (40).

12. The battery pack (3) according to claim 9, wherein the first current collector (30) includes:
a support portion (31) at a center on a surface of the electrode assembly (10);
a uncoated region coupling portion extending from the support portion (31) and coupled to the first uncoated region (11); and
a housing contact portion (33) extending from the support portion (31) or an end of the uncoated region coupling portion and interposed between the housing (20) and the sealing portion (52).

13. The battery pack (3) according to claim 12, wherein the support portion (31) includes a first current collector hole at a location corresponding to a winding center hole of the electrode assembly (10).

14. The battery pack (3) according to claim 12, wherein the housing (20) includes:
a beading portion (21) of which part of sidewall is press-fit inward; and
a crimping portion (22) of which an end of the housing (20) defining the opening is extended and bent around edges of the cap (40) below the beading portion (21), and
wherein the housing contact portion (33) contacts a surface of the beading portion (21) facing the cap (40).

15. The battery pack (3) according to claim 14, wherein the sealing portion (52) is bent along the crimping portion (22), and fills in between the housing contact portion (33) and the cap (40) while surrounding the edges of the cap (40).

16. The battery pack (3) according to claim 15, wherein the sealing portion (52) has a smaller thickness between the housing contact portion (33) and the cap (40) which than a thickness between the beading portion (21) and the cap (40).

17. The battery pack (3) according to claim 15, wherein a compression ratio of the sealing portion (52) between the housing contact portion (33) and the cap (40) is larger than a compression ratio of the sealing portion (52) between the beading portion (21) and the cap (40).

18. The battery pack (3) according to claim 15, wherein a compression ratio of the sealing portion (52) between the housing contact portion (33) and the cap (40) is equal to a compression ratio of the sealing portion (52) between the beading portion (21) and the cap (40).

19. The battery pack (3) according to claim 12, wherein the movement prevention portion (51) covers the support portion (31) to prevent the support portion (31) from being exposed to outside of the movement prevention portion (51).

20. The battery pack (3) according to claim 2, wherein the cap (40) includes a venting portion (41) having a smaller thickness than its surrounding area, and
the movement prevention portion (51) is disposed at an inner position than the venting portion (41) to prevent the movement prevention portion (51) from covering the venting portion (41).

21. The battery pack (3) according to claim 12, wherein the connection portion (53) does not overlap the housing contact portion (33) along a height direction of the battery pack (3).

22. The battery pack (3) according to claim 1, wherein each of the plurality of batteries (1) further comprises:
a second current collector (70) coupled to the first uncoated region (11); and
an insulator (80) interposed between the closed portion on top of the housing (20) and the second current collector (70).

23. The battery pack (3) according to claim 22, wherein a height of the insulator corresponds to a distance between the second current collector (70) and the closed portion.

24. The battery pack (3) according to claim 1, wherein a resistance measured between a positive electrode and a negative electrode is 4 milliohm or less.

25. The battery pack (3) according to claim 1, wherein a ratio of form factor calculated by dividing a diameter of the battery by its height is larger than 0.4.

26. The battery pack (3) according to any one of claims 1 to 25, wherein
the terminal (60) and the outer surface (20a) of the closed portion of the housing (20) of each battery (1) are positioned facing upward.

27. A vehicle (5) comprising the battery pack (3) according to any one of claims 1 to 26.

## Patentansprüche

1. Batteriepack (3), umfassend:
eine Vielzahl von Batterien (1), die in Spalten und Reihen angeordnet sind, und eine Vielzahl von Sammelschienen (150), die zwischen benachbarten Spalten der Vielzahl von Batterien (1) angeordnet sind, wobei die Sammelschienen (150) Batterien (1), die in jeweiligen der Spalten angeordnet sind, miteinander parallel schalten und Batterien (1), die in zwei benachbarten Spalten angeordnet sind, in Reihe schalten,
wobei jede der Batterien (1) umfasst:
eine Elektrodenanordnung (10), die eine erste Elektrode und eine zweite Elektrode und einen Separator, der zwischen der ersten Elektrode und der zweiten Elektrode angeordnet ist, umfasst, wobei die erste Elektrode, die zweite Elektrode und der Separator um eine Wickelachse gewickelt sind, um einen Kern und eine Außenumfangsfläche zu definieren, wobei die erste Elektrode und die zweite Elektrode einen ersten unbeschichteten Bereich (11) bzw. einen zweiten unbeschichteten Bereich (12) entlang einer Wickelrichtung umfassen und eine Aktivmaterialschichtbeschichtung in dem ersten unbeschichteten Bereich (11) und dem zweiten unbeschichteten Bereich (12) fehlt;
ein Gehäuse (20) mit einer zylindrischen Struktur zum Aufnehmen der Elektrodenanordnung (10) durch eine Öffnung des Gehäuses (20), die an einem Boden ausgebildet ist, und mit einem geschlossenen Abschnitt an einer Oberseite des Gehäuses (20), wobei das Gehäuse (20) mit dem ersten unbeschichteten Bereich (11) elektrisch verbunden ist;
einen ersten Stromabnehmer (30), der mit dem ersten unbeschichteten Bereich (11) gekoppelt und innerhalb des Gehäuses (20) angeordnet ist;
eine Kappe (40), die die Öffnung bedeckt;
einen Abstandshalter (50), der zwischen der Kappe (40) und der Elektrodenanordnung (10) angeordnet ist und konfiguriert ist, um die Elektrodenanordnung (10) zu fixieren und das Gehäuse (20) abzudichten; und
einen Anschluss (60), der mit dem zweiten unbeschichteten Bereich (12) elektrisch verbunden ist und durch den geschlossenen Abschnitt des Gehäuses (20) verläuft,
wobei jede der Vielzahl von Sammelschienen (150) Folgendes beinhaltet:
einen Körperabschnitt (151), der sich zwischen benachbarten Spalten von Batterien (1) oder entlang einer jeweiligen der Spalten von Batterien (1) erstreckt;
eine Vielzahl von ersten Sammelschienenanschlüssen (152), die sich in einer Richtung von dem Körperabschnitt (151) zu Anschlüssen (60) der Batterien (1) einer gegebenen Spalte der Batterien (1) erstrecken und mit den Anschlüssen (60) der Batterien (1) elektrisch gekoppelt sind; und
eine Vielzahl von zweiten Sammelschienenanschlüssen (153), die sich in einer entgegengesetzten Richtung von dem Körperabschnitt (151) erstrecken und mit Außenflächen (20a) der geschlossenen Abschnitte der Gehäuse (20) der Batterien (1) elektrisch gekoppelt sind, die in einer Spalte von Batterien (1) vorgesehen sind, die der gegebenen Spalte von Batterien (1) benachbart ist.

2. Batteriepack (3) nach Anspruch 1, wobei der Abstandshalter (50) Folgendes beinhaltet:
einen Bewegungsverhinderungsabschnitt (51) zwischen dem ersten Stromabnehmer (30) und der Kappe (40);
einen Dichtungsabschnitt (52) zwischen dem Gehäuse (20) und der Kappe (40); und
einen Verbindungsabschnitt (53), der den Bewegungsverhinderungsabschnitt (51) mit dem Dichtungsabschnitt (52) verbindet.

3. Batteriepack (3) nach Anspruch 2, wobei eine Höhe des Bewegungsverhinderungsabschnitts einem Abstand zwischen dem ersten Stromabnehmer (30) und der Kappe (40) entspricht.

4. Batteriepack (3) nach Anspruch 2, wobei sich der Bewegungsverhinderungsabschnitt (51) in einer Mitte auf einer Oberfläche der Elektrodenanordnung (10) befindet.

5. Batteriepack (3) nach Anspruch 2, wobei der Bewegungsverhinderungsabschnitt (51) ein Abstandshalterloch an einer Stelle umfasst, die einem Wickelmittelloch der Elektrodenanordnung (10) entspricht.

6. Batteriepack (3) nach Anspruch 2, wobei sich der Dichtungsabschnitt (52) entlang eines Innenumfangs des Gehäuses (20) erstreckt.

7. Batteriepack (3) nach Anspruch 6, wobei das Gehäuse (20) Folgendes beinhaltet:
einen Wulstabschnitt (21), der durch Presspassen eines Außenumfangs gebildet ist; und
einen Crimpabschnitt (22), von dem sich ein Ende des Gehäuses (20), das die Öffnung definiert, erstreckt und gebogen ist, um Kanten der Kappe (40) unter dem Wulstabschnitt (21) zu umgeben.

8. Batteriepack (3) nach Anspruch 7, wobei der Dichtungsabschnitt (52) entlang des Crimpabschnitts (22) gebogen ist und die Kanten der Kappe (40) umgibt.

9. Batteriepack (3) nach Anspruch 2, wobei der Verbindungsabschnitt (53) eine Vielzahl von Verlängerungsschenkeln (53a) beinhaltet, die sich von dem Bewegungsverhinderungsabschnitt (51) in einer radialen oder zickzack-förmigen Form oder einer kombinierten Form davon erstrecken.

10. Batteriepack (3) nach Anspruch 9, wobei die Vielzahl von Verlängerungsschenkeln (53a) konfiguriert ist, um ein Kontaktieren des ersten Stromabnehmers (30) zu vermeiden.

11. Batteriepack (3) nach Anspruch 9, wobei die Vielzahl von Verlängerungsschenkeln (53a) konfiguriert ist, um einen Abstand von der Kappe (40) aufrechtzuerhalten.

12. Batteriepack (3) nach Anspruch 9, wobei der erste Stromabnehmer (30) Folgendes beinhaltet:
einen Stützabschnitt (31) in einer Mitte auf einer Oberfläche der Elektrodenanordnung (10);
einen Kopplungsabschnitt des unbeschichteten Bereichs, der sich von dem Stützabschnitt (31) erstreckt und mit dem ersten unbeschichteten Bereich (11) gekoppelt ist; und
einen Gehäusekontaktabschnitt (33), der sich von dem Stützabschnitt (31) oder einem Ende des Kopplungsabschnitts des unbeschichteten Bereichs erstreckt und zwischen dem Gehäuse (20) und dem Dichtungsabschnitt (52) angeordnet ist.

13. Batteriepack (3) nach Anspruch 12, wobei der Stützabschnitt (31) ein erstes Stromabnehmerloch an einer Stelle umfasst, die einem Wickelmittelloch der Elektrodenanordnung (10) entspricht.

14. Batteriepack (3) nach Anspruch 12, wobei das Gehäuse (20) Folgendes beinhaltet:
einen Wulstabschnitt (21), von dem ein Teil der Seitenwand nach innen pressgepasst ist; und
einen Crimpabschnitt (22), von dem sich ein Ende des Gehäuses (20), das die Öffnung definiert, erstreckt und um Kanten der Kappe (40) unter dem Wulstabschnitt (21) gebogen ist, und
wobei der Gehäusekontaktabschnitt (33) eine Oberfläche des Wulstabschnitts (21) kontaktiert, die der Kappe (40) zugewandt ist.

15. Batteriepack (3) nach Anspruch 14, wobei der Dichtungsabschnitt (52) entlang des Crimpabschnitts (22) gebogen ist und zwischen dem Gehäusekontaktabschnitt (33) und der Kappe (40) ausfüllt, während er die Kanten der Kappe (40) umgibt.

16. Batteriepack (3) nach Anspruch 15, wobei der Dichtungsabschnitt (52) eine kleinere Dicke zwischen dem Gehäusekontaktabschnitt (33) und der Kappe (40) aufweist als eine Dicke zwischen dem Wulstabschnitt (21) und der Kappe (40).

17. Batteriepack (3) nach Anspruch 15, wobei ein Kompressionsverhältnis des Dichtungsabschnitts (52) zwischen dem Gehäusekontaktabschnitt (33) und der Kappe (40) größer ist als ein Kompressionsverhältnis des Dichtungsabschnitts (52) zwischen dem Wulstabschnitt (21) und der Kappe (40).

18. Batteriepack (3) nach Anspruch 15, wobei ein Kompressionsverhältnis des Dichtungsabschnitts (52) zwischen dem Gehäusekontaktabschnitt (33) und der Kappe (40) gleich einem Kompressionsverhältnis des Dichtungsabschnitts (52) zwischen dem Wulstabschnitt (21) und der Kappe (40) ist.

19. Batteriepack (3) nach Anspruch 12, wobei der Bewegungsverhinderungsabschnitt (51) den Stützabschnitt (31) abdeckt, um zu verhindern, dass der Stützabschnitt (31) zur Außenseite des Bewegungsverhinderungsabschnitts (51) freiliegt.

20. Batteriepack (3) nach Anspruch 2, wobei die Kappe (40) einen Entlüftungsabschnitt (41) beinhaltet, der eine kleinere Dicke als sein umgebender Bereich aufweist, und
der Bewegungsverhinderungsabschnitt (51) an einer inneren Position als der Entlüftungsabschnitt (41) angeordnet ist, um zu verhindern, dass der Bewegungsverhinderungsabschnitt (51) den Entlüftungsabschnitt (41) abdeckt.

21. Batteriepack (3) nach Anspruch 12, wobei der Verbindungsabschnitt (53) den Gehäusekontaktabschnitt (33) entlang einer Höhenrichtung des Batteriepacks (3) nicht überlappt.

22. Batteriepack (3) nach Anspruch 1, wobei jede der Vielzahl von Batterien (1) ferner Folgendes umfasst:
einen zweiten Stromabnehmer (70), der mit dem ersten unbeschichteten Bereich (11) gekoppelt ist; und
einen Isolator (80), der zwischen dem geschlossenen Abschnitt an der Oberseite des Gehäuses (20) und dem zweiten Stromabnehmer (70) angeordnet ist.

23. Batteriepack (3) nach Anspruch 22, wobei eine Höhe des Isolators einem Abstand zwischen dem zweiten Stromabnehmer (70) und dem geschlossenen Abschnitt entspricht.

24. Batteriepack (3) nach Anspruch 1, wobei ein zwischen einer positiven Elektrode und einer negativen Elektrode gemessener Widerstand 4 Milliohm oder weniger beträgt.

25. Batteriepack (3) nach Anspruch 1, wobei ein Verhältnis eines Formfaktors, der durch Teilen eines Durchmessers der Batterie durch ihre Höhe berechnet wird, größer als 0,4 ist.

26. Batteriepack (3) nach einem der Ansprüche 1 bis 25, wobei der Anschluss (60) und die Außenfläche (20a) des geschlossenen Abschnitts des Gehäuses (20) jeder Batterie (1) nach oben weisend positioniert sind.

27. Fahrzeug (5), umfassend das Batteriepack (3) nach einem der Ansprüche 1 bis 26.

## Revendications

1. Bloc-batterie (3) comprenant:
une pluralité de batteries (1) agencées en colonnes et rangées, et une pluralité de barres omnibus (150) agencées entre des colonnes adjacentes de la pluralité de batteries (1), les barres omnibus (150) connectant des batteries (1) agencées dans des colonnes respectives des colonnes, en parallèle, et connectant des batteries (1) agencées en deux colonnes adjacentes en série,
chacune des batteries (1) comprenant :
un ensemble d'électrodes (10) comprenant une première électrode et une deuxième électrode, et un séparateur intercalé entre la première électrode et la deuxième électrode, la première électrode, la deuxième électrode et le séparateur étant enroulés autour d'un axe d'enroulement pour définir un noyau et une surface périphérique extérieure, la première électrode et la deuxième électrode comprenant une première zone non revêtue (11) et une deuxième zone non revêtue (12) dans un sens de l'enroulement, respectivement, et un revêtement en couche de matière active étant absent dans la première zone non revêtue (11) et la deuxième zone non revêtue (12) ;
un boîtier (20) possédant une structure cylindrique pour recevoir l'ensemble d'électrodes (10) à travers une ouverture du boîtier (20) formée sur un fond, et possédant une partie fermée sur un dessus du boîtier (20), le boîtier (20) étant connecté électriquement à la première zone non revêtue (11) ;
un premier collecteur de courant (30) couplé à la première zone revêtue (11), et disposé au sein du boîtier (20) ;
un couvercle (40) couvrant l'ouverture ;
un espaceur (50) intercalé entre le couvercle (40) et l'ensemble d'électrodes (10), et configuré pour fixer l'ensemble d'électrodes (10) et pour sceller le boîtier (20) ;
et
une borne (60) connectée électriquement à la deuxième zone non revêtue (12), et passant à travers la partie fermée du boîtier (20),
chacune de la pluralité de barres omnibus (150) comprenant :
une partie de corps (151) s'étendant entre des colonnes adjacentes de batteries (1), ou le long d'une colonne respective des colonnes de batteries (1) ;
une pluralité de premières bornes de barre omnibus (152) s'étendant dans une direction allant de la partie du corps (151) à des bornes (60) des batteries (1) d'une colonne donnée des batteries (1), et couplées électriquement aux bornes (60) des batteries (1) ; et
une pluralité de deuxièmes bornes de barre omnibus (153) s'étendant dans une direction opposée depuis la partie du corps (151), et couplées électriquement à des surfaces extérieures (20a) des parties fermées des boîtiers (20) des batteries (1) agencées dans une colonne de batteries (1) adjacentes à ladite colonne de batteries (1) donnée.

2. Bloc-batterie (3) selon la revendication 1, l'espaceur (50) comprenant :
une partie de prévention du déplacement (51) entre le premier collecteur de courant (30) et le couvercle (40) ;
une partie de scellement (52) entre le boîtier (20) et le couvercle (40) ; et
une partie de connexion (53) raccordant la partie de prévention du déplacement (51) à la partie de scellement (52).

3. Bloc-batterie (3) selon la revendication 2, une hauteur de la partie de prévention du déplacement correspondant à une distance entre le premier collecteur de courant (30) et le couvercle (40).

4. Bloc-batterie (3) selon la revendication 2, la partie de prévention du déplacement (51) se trouvant à un centre sur une surface de l'ensemble d'électrodes (10).

5. Bloc-batterie (3) selon la revendication 2, la partie de prévention du déplacement (51) comprenant un orifice d'espaceur dans un emplacement correspondant à un orifice de centre d'enroulement de l'ensemble d'électrodes (10).

6. Bloc-batterie (3) selon la revendication 2, la partie de scellement (52) s'étendant le long d'un pourtour intérieur du boîtier (20).

7. Bloc-batterie (3) selon la revendication 6, le boîtier (20) comprenant :
une partie de moulure (21) formée en assemblant par pression un pourtour extérieur ; et
une partie de sertissage (22) dont un bout du boîtier (20) définissant l'ouverture est déployée et pliée de façon à entourer des bords du couvercle (40) sous la partie de moulure (21).

8. Bloc-batterie (3) selon la revendication 7, la partie de scellement (52) étant pliée le long de la partie de sertissage (22), et entourant les bords du couvercle (40).

9. Bloc-batterie (3) selon la revendication 2, la partie de connexion (53) comprenant une pluralité de bras d'extension (53a) déployés depuis la partie de prévention du déplacement (51) sous une forme radiale ou croisée, ou une forme mixte de ces dernières.

10. Bloc-batterie (3) selon la revendication 9, la pluralité de bras d'extension (53a) étant configurée pour éviter tout contact avec le premier collecteur de courant (30).

11. Bloc-batterie (3) selon la revendication 9, la pluralité de bras d'extension (53a) étant configurée pour maintenir une distance depuis le couvercle (40).

12. Bloc-batterie (3) selon la revendication 9, le premier collecteur de courant (30) comprenant :
une partie de support (31) à un centre sur une surface de l'ensemble d'électrodes (10) ;
une partie de couplage de la zone non revêtue s'étendant depuis la partie de support (31), et couplée à la première zone non revêtue (11) ; et
une partie de contact du boîtier (33) s'étendant depuis la partie de support (31) ou d'un bout de la partie de couplage de la zone non revêtue, et intercalée entre le boîtier (20) et la partie de scellement (52).

13. Bloc-batterie (3) selon la revendication 12, la partie de support (31) comprenant un premier orifice de collecteur de courant dans un emplacement correspondant à un orifice de centre d'enroulement de l'ensemble d'électrodes (10).

14. Bloc-batterie (3) selon la revendication 12, le boîtier (20) comprenant :
une partie de moulure (21) sur laquelle une partie de la paroi latérale est assemblée par emmanchement vers l'intérieur ; et
une partie de sertissage (22), dont un bout du boîtier (20) définit l'ouverture, déployée et pliée autour de bords du couvercle (40) sous la partie de moulure (21), et
la partie de contact du boîtier (33) se trouvant au contact d'une surface de la partie de moulure (21) située face au couvercle (40).

15. Bloc-batterie (3) selon la revendication 14, la partie de scellement (52) étant pliée le long de la partie de sertissage (22), comblant entre la partie de contact du boîtier (33) et le couvercle (40) tout en entourant les bords du couvercle (40).

16. Bloc-batterie (3) selon la revendication 15, l'épaisseur de la partie de scellement (52) entre la partie de contact du boîtier (33) et le couvercle (40) étant inférieure à une épaisseur entre la partie de moulure (21) et le couvercle (40).

17. Bloc-batterie (3) selon la revendication 15, un taux de compression de la partie de scellement (52) entre la partie de contact du boîtier (33) et le couvercle (40) étant supérieur à un taux de compression de la partie de scellement (52) entre la partie de moulure (21) et le couvercle (40).

18. Bloc-batterie (3) selon la revendication 15, un taux de compression de la partie de scellement (52) entre la partie de contact du boîtier (33) et le couvercle (40) étant égal à un taux de compression de la partie de scellement (52) entre la partie de moulure (21) et le couvercle (40).

19. Bloc-batterie (3) selon la revendication 12, la partie de prévention du déplacement (51) couvrant la partie de support (31) afin d'empêcher l'exposition de la partie de support (31) à l'extérieur de la partie de prévention du déplacement (51).

20. Bloc-batterie (3) selon la revendication 2, le couvercle (40) comprenant une partie d'évacuation (41) dont l'épaisseur est inférieure à celle de sa zone environnante, et
la partie de prévention du déplacement (51) étant disposée dans une position intérieure relativement à la partie d'évacuation (41), afin d'empêcher la partie de prévention du déplacement (51) de couvrir la partie d'évacuation (41).

21. Bloc-batterie (3) selon la revendication 12, la partie de connexion (53) ne chevauchant pas la partie de contact du boîtier (33) dans le sens de la hauteur du bloc-batterie (3).

22. Bloc-batterie (3) selon la revendication 1, chacune de la pluralité de batteries (1) comprenant en outre :
un deuxième collecteur de courant (70) couplé à la première zone non revêtue (11) ; et
un isolateur (80) intercalé entre la partie fermée sur le dessus du boîtier (20) et le deuxième collecteur de courant (70).

23. Bloc-batterie (3) selon la revendication 22, une hauteur de l'isolateur correspondant à une distance entre le deuxième collecteur de courant (70) et la partie fermée.

24. Bloc-batterie (3) selon la revendication 1, une résistance mesurée entre une électrode positive et une électrode négative mesurant 4 milli-ohm ou moins.

25. Bloc-batterie (3) selon la revendication 1, un ratio du facteur de forme calculé en divisant un diamètre de la batterie par sa hauteur étant supérieur à 0,4.

26. Bloc-batterie (3) selon une quelconque des revendications 1 à 25,
la borne (60) et la surface extérieure (20a) de la partie fermée du boîtier (20) de chaque batterie (1) étant positionnées de façon à être tournées vers le haut.

27. Véhicule (5) comprenant le bloc-batterie (3) selon une quelconque des revendications 1 à 26.
